Europäisches Patentamt

European Patent Office

Office européen des brevets

(11) Publication number: 0 245 087 B1

# EUROPEAN PATENT SPECIFICATION

(45) Date of publication of patent specification: **29.07.92** (51) Int. Cl.⁵: **G02B 6/38**

(21) Application number: **87304031.5**

(22) Date of filing: **06.05.87**

(54) **Block for optical termination.**

(30) Priority: **06.05.86 US 860262**

(43) Date of publication of application:
**11.11.87 Bulletin 87/46**

(45) Publication of the grant of the patent:
**29.07.92 Bulletin 92/31**

(84) Designated Contracting States:
**AT BE CH DE ES FR GB GR IT LI NL SE**

(56) References cited:
**EP-A- 0 159 768**
**FR-A- 2 438 851**

**PATENT ABSTRACTS OF JAPAN, vol. 5, no.
32 (P-50)[704], 27th February 1981 & JP-A-55
155 318 (NIPPON DENSHIN DENWA KOSHA)
03-12-1980**

**PATENT ABSTRACTS OF JAPAN, vol. 9, no. 6
(P-326)[1729], 11th January 1985 & JP-A-59
154 404 (FURUKAWA DENKI KOGYO K.K.)
03-09-1984**

(73) Proprietor: **RAYCHEM CORPORATION (a California corporation)
300 Constitution Drive
Menlo Park California 94025(US)**

(72) Inventor: **Schlingensiepen, Robert
61 Buena Vista Terrace
San Francisco California 94117(US)**
Inventor: **Levinson, Frank Howard
317 Northumberland
Redwood City California 94061(US)**

(74) Representative: **Benson, John Everett et al
Raychem Limited Intellectual Property Law
Department Faraday Road Dorcan
Swindon, Wiltshire SN3 5HH(GB)**

## Description

The present invention relates to a method and apparatus for terminating an optical fibre.

Numerous methods have been proposed in the prior art for terminating optical fibres, each of which possesses certain advantages and disadvantages. According to one such method, an optical fibre is secured within a contact body so that a fibre end protrudes from a front face of the contact, and thereafter the fibre end is ground down and polished. This method is disadvantageous since grinding and polishing a fibre end is an extremely craft sensitive procedure not easily done in the field.

JP-A-55-155318 (NTT) discloses an optical fibre connector plug with an index matching agent. The plug has an axial hole into which an optical fibre is inserted, such that the end face of the fibre is somewhat recessed from a front face of the plug. The index matching agent is applied to the fabric front face and the plug front face. An optical fibre connector is also disclosed in FR-A-2438851 (Alliance Technique Industrielle). A metal or sapphire sphere is shown positioned at a front face of the fibre.

Accordingly, it is an object of the present invention to eliminate the above-noted drawbacks of prior art apparatuses for terminating optical fibres.

These and other objects are achieved by an apparatus for terminating an optical fibre as defined in claim 1.

The apparatus of the invention has blocking means made of a resiliently deformable material shaped so as to seat and seal against a front end of the bore which prevents adhesive from leaking out of the front end of the bore when the optical fibre is inserted therein. Accordingly, the adhesive is forced back into the bore via a small space between an outer cylindrical surface of the fibre and an inner cylindrical surface of the bore so as to substantially fill all voids otherwise existing therein. Furthermore, the blocking means of the invention has a curved shape, e.g. convex, spherical, etc., which causes the blocking means to wipe a front face of the optical fibre clean as the optical fibre contacts and deforms the blocking means. By appropriately choosing an elastic modulus of the blocking means as well as its size and shape, and by appropriately choosing a magnitude of a force by which the blocking means is seated against the front face of the bore as well as the force by which the optical fibre is inserted against the blocking means, a front face of the optical fibre can be recessed from a front face of the contact body a predetermined distance, all these factors generally being dependent on the fibre diameter. Subsequent to terminating the optical fibre by the method and apparatus described, the blocking means is then removed from the contact body so that the terminated optical fibre contact can then be later joined to another terminated optical fibre contact.

Figure 1 illustrates a contact suitable for use with the present invention for terminating an optical fibre;

Figure 2 illustrates one preferred embodiment of the invention usable with the contact as illustrated in Figure 1; and

Figure 3 illustrates the embodiment of Figure 2 except that an optical fibre 10 is shown as being fully inserted within the contact in Figure 3 whereas it is only partially inserted in Figure 2.

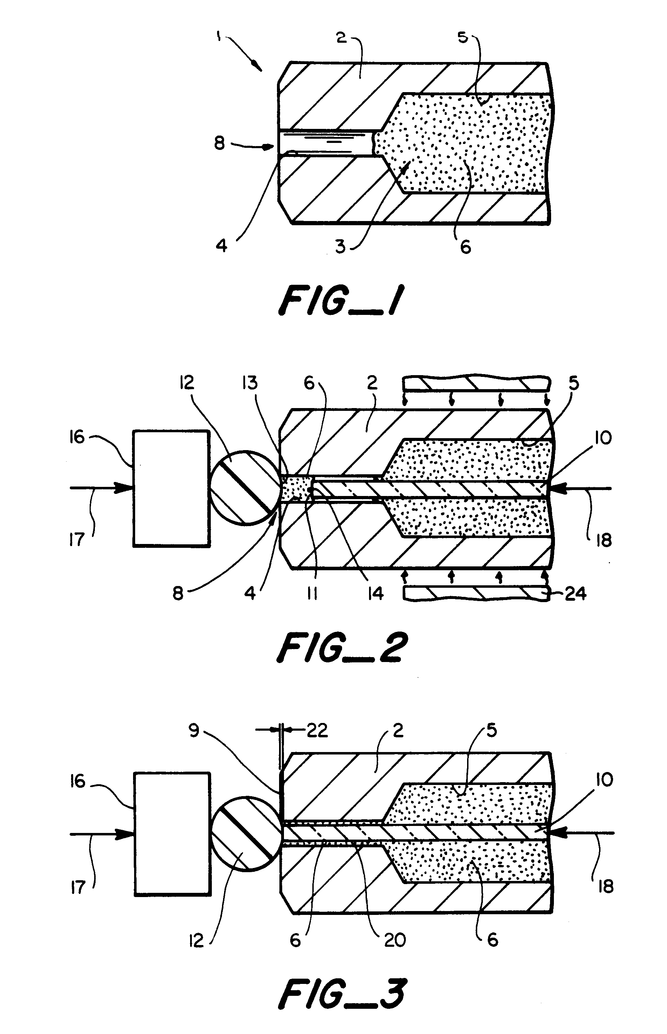

Figure 1 illustrates a contact 1 suitable for use with the present invention, the contact 1 including a contact body 2 having a cylindrical bore 3 therein of non-uniform diameter, a front portion 4 of the bore 3 being smaller than a rear portion 5 of the bore. The bore front portion 4 is preferably sized so as to be only slightly larger than an optical fiber 10 to be terminated, and accordingly is cylindrically shaped, its inside diameter preferably being between 2 and 20 microns larger than the fiber outside diameter, more preferably between 4 and 16 microns, most preferably between 4 and 8 microns, a preferred embodiment being 4 microns. The smaller the difference between the inside diameter of the bore portion 4 and the outside diameter of the fiber 10 the better the fiber is aligned along a center axis of the contact body 2, a disadvantage of too small an inside-outside diameter difference being increased costs associated with required machining tolerances.

The term "optical fiber" as used herein refers to a waveguide, preferably but not necessarily cylindrical, comprising a core and a cladding of optically transparent material, e.g. glass or plastic, with the cladding having an index of refraction lower than the core.

Means for securing the fiber 10 within the bore 3, e.g. preferably an adhesive 6, is preferably disposed within the enlarged rear portion 5 of the bore. The bore portion 5 is sized so as to accommodate a sufficient amount of adhesive 6 so as to enable the optical fiber 10 to be adequately secured within the contact body 2. The adhesive preferably is solid in cross-section, and can comprise solder, glass, or a multi-component mixture. Preferably the adhesive is stable at room temperature and is solid so that the contact 1 can be stored for an appreciable length of time without losing any significant amount of its functional attributes. Preferably the adhesive should be softenable upon being heated so that the optical fiber 10 can be inserted therethrough subsequent to heating. After the fiber insertion, the adhesive is then hardened by further heating when chemical curing of multi-component adhesive is required or by simply cooling when the adhesive is of a non-reactive type, e.g. solder or glass. In the event the adhesive comprises a thermoset, it preferably should comprise a multi-component room-temperature stable mixture which when heated softens, liquefies, mixes and cures to form an adhesive capable of adhering to the optical fibre and the contact body, one preferred embodiment of such a mixture being a novolac epoxy resin, either dicyandiamide or substituted dicyandiamide, and imidazole.

The invention is best understood by referring to Figures 2 and 3, Figure 2 showing a state of the invention whereby an optical fibre has only been partially inserted into the contact body 2, with the state shown in Figure 3 being with the fibre 10 being totally inserted. In these figures, a blocking means 12 is disposed in contact with and against a front end 8 of the bore 3, and held thereagainst by a force applied in the direction of arrow 17, this force being generated by any appropriate force generating means 16, the means 16 shown comprising a pressure block.

The blocking means has a curved shaped region 13 which seats against the bore front end 8, and blocks the end 8. The region 13 is preferably curved in three dimensions, a preferred embodiment being a convex shape or spherical shape. The entire blocking means 12 can, if desired, comprise a sphere, though other curved shapes are suitable as well. To achieve all the advantages of the invention the curved shaped region 13 is formed of a resiliently deformable material which has a radius such that the region 13 is deformed when contacted by a front face 11 of the optical fibre 10 when the fibre 10 is inserted into the contact body along a direction indicated by the arrow 18, this arrow being indicative of another force generating means, constructions of the force generating means 16, 18 being well known in the art.

A preferred material of the blocking means is nylon. As can be appreciated from examining Figures 2 and 3, since the blocking means region 13 has a curved shape, a centre point 14 on the optical fibre front face 11 will first contact the region 13, and as the region 13 deforms by applying further insertion forces 18 to the fibre 10, circular points on the optical fibre front face 11 closest to the centre point 14 will progressively contact the region 13 until the region 13 is substantially flattened as illustrated in Figure 3. Accordingly, as the region 13 flattens, adhesive 6 which is removed from the bore rear portion 5 and disposed in front of the optical fibre front face 11 in the bore front portion 4 is wiped off the optical fibre front face so as to clean this face 11. In addition, the blocking means 12 is seated against the bore front end 8 and is held thereagainst by the force 16 which preferably is chosen to be of a magnitude sufficient to maintain the seating when the region 13 is exposed to the fibre force 18 exerted by the fibre front face 11. As adhesive is wiped from the fibre front face 11 it is forced rearwardly in the direction of the arrow 17 and into a cylindrical annulus 20 formed between the outer cylindrical surface of the fibre 10 and the inner cylindrical surface of the bore front portion 4 so as to substantially fill the portion annulus 20 and eliminate or minimize any void formation located therein.

A magnitude of the forces 16, 18 and a size of the blocking means region diameter and its resiliency preferably are all chosen such that subsequent to deforming the region 13 and achieving steady state the fibre front face 11 is recessed an optimum distance 22 from a front face 9 of the contact body 2. Accordingly, when the optical fibre 10 is terminated using the method and apparatus described herein, its front face will not contact a front face of a similarly terminated optical fibre which could cause scratching when the contacts move relative to each other, as can occur due to vibration loads, for example. Preferably, the magnitude of the distance 22 is between 1 and 6 microns, more preferably between 2 and 4 microns.

Accordingly, it can be appreciated that to optimally terminate an optical fibre 10, an apparatus 24 illustrated in Figure 2 is first used to heat and soften the adhesive 6 so that the front face 11 of the optical fibre can be inserted through the bore rear portion 5 so as to cause a portion of the adhesive 6 to be disposed in front of the fibre front face 11 in the bore front portion 4.

Thereafter, subsequent to totally inserting the fibre 10 into the contact body so as to press up against the blocking means 12, the adhesive is further heated as required to cure it or to allow its viscosity to reach a level whereby substantially the entire bore front portion 4 is filled with the adhesive, and thereafter the adhesive is allowed to cure and set and/or simply cool to room temperature. Thereafter, the blocking means 12 is removed, and the terminated optical fibre is ready to be connected, as desired.

Though the invention has been described by reference to one preferred embodiment thereof, the invention is not to be so limited and it to include all reasonable equivalents thereof, and accordingly is to be limited only by the appended claims.

## Claims

1. an apparatus for terminating an optical fibre (10), comprising

   a optical fibre contact body (2) having means for securing an optical fibre in a bore (3) therein, the bore being sized so as to be able to receive the optical fibre; and

means (12) for blocking a front end (8) of the bore as the optical fibre is inserted therein for termination, the blocking means having a curved shape in a region (13) confronting the front end of the bore;

characterized in that the curved shaped region (13) of the blocking means is made of a material which is resiliently deformable so that the curved shaped region of the blocking means (12) is capable of removing adhesive (6) from a front face (11) of the optical fibre (10) as the optical fibre contacts and deforms the curved shape region of the blocking means (12).

2. The apparatus of claim 1, further comprising:

first force means (16) for urging the curved shaped region of the blocking means against the front end of the bore; and

second force means (18) for urging the optical fibre front face against the curved shaped region of the blocking means.

3. The apparatus of claim 3, the curved shaped region of the blocking means being formed of a radius of curvature and of a material having a resilience such that the front face of the optical fibre is recessed from the front end of the bore a predetermined amount when the optical fibre and the blocking means are urged toward one another by the first and second force means.

4. The apparatus of claim 4, forces generated by the first and second force means being determined so that at least some of the securing means adhesive is forced within an annulus (20) between an outer wall of the optical fibre and a front portion of the bore.

5. The apparatus of claim 5, the bore having a non-uniform cross-sectional profile, with the front portion of the bore being smaller in cross-section than a rear portion of the bore, the securing means being selected from the group of materials consisting of glass, solder, and a multicomponent mixture.

6. The apparatus of claim 1, the curved shape being convex.

7. The apparatus of claim 1, the curved shape being spherical.

8. A method of terminating an optical fibre (10), comprising the steps of:

blocking a front end (8) of a bore (3) formed within an optical fibre contact body (2) with a bore blocking means (12), the blocking means having a curved shape in a region confronting the front end of the bore; and

inserting an optical fibre through the bore and an adhesive (6) disposed therein such that a front end of the optical fibre contacts the bore blocking means;

characterized in that the bore blocking means is formed of a material sufficiently resilient such that it is deformed by the front end of the optical fibre and removes any adhesive disposed thereon.

9. The method of claim 9, further comprising the step of softening the adhesive disposed within the bore of the optical fibre contact body prior to inserting the optical fibre through the bore.

10. The method of claim 9, the front end of the bore being blocked with a force sufficiently large such that adhesive is forced within an annulus (20) defined by an outer cylindrical surface of the front end of the optical fibre and an inner cylindrical surface of a front portion of the bore.

11. The method of claim 11, further comprising the step of removing the blocking means (12) from the front end of the bore subsequent to the adhesive setting.

**Revendications**

1. Appareil pour la terminaison d'une fibre optique (10), comportant
   un corps de contact (2) de fibre optique ayant un moyen destiné à fixer une fibre optique dans une lumière (3) de ce corps, la lumière étant dimensionnée de façon à pouvoir recevoir la fibre optique : et
   un moyen (12) destiné à bloquer une extrémité avant (8) de la lumière lorsque la fibre optique y est insérée pour une terminaison, le moyen de blocage ayant une forme arrondie dans une zone (13) faisant face à l'extrémité avant de la lumière ;
   caractérisé en ce que la zone (13) de forme arrondie du moyen de blocage est réalisée en une matière qui est élastiquement déformable afin que la zone de forme arrondie du moyen (12) de blocage soit capable d'enlever de l'adhésif (6) d'une face avant (11) de la fibre optique (10) pendant que la fibre optique est en contact avec la zone de forme arrondie du moyen de blocage (12) et la déforme.

2. Appareil selon la revendication 1, comportant en outre :

    un premier moyen de force (16) destiné à solliciter la zone de forme arrondie du moyen de blocage contre l'extrémité avant de la lumière ;

    un second moyen de force (18) destiné à solliciter la face avant de la fibre optique contre la zone de forme arrondie du moyen de blocage.

3. Appareil selon la revendication 2, dans lequel la zone de forme arrondie du moyen de blocage est formée à un rayon de courbure et en une matière élastique tels que la face avant de la fibre optique est en retrait d'une valeur prédéterminée de l'extrémité avant de la lumière lorsque la fibre optique et le moyen de blocage sont sollicités l'un vers l'autre par les premier et second moyens de force.

4. Appareil selon la revendication 3, dans lequel des forces générées par les premier et second moyens de force sont déterminées de manière qu'au moins une partie de l'adhésif du moyen de fixation soit introduite à force dans un espace annulaire (20) entre une paroi extérieure de la fibre optique et une partie avant de la lumière.

5. Appareil selon la revendication 4, dans lequel la lumière présente un profil non uniforme en section transversale, la partie avant de la lumière étant d'une section inférieure à celle d'une partie arrière de la lumière, le moyen de fixation étant choisi dans le groupe de matières comprenant du verre, de la soudure et un mélange de composants multiples.

6. Appareil selon la revendication 1, dans lequel la forme arrondie est convexe.

7. Appareil selon la revendication 1, dans lequel la forme arrondie est sphérique.

8. Procédé pour la terminaison d'une fibre optique (10), comprenant les étapes qui consistent :

    à bloquer une extrémité avant (8) d'une lumière (3) formée dans un corps de contact (2) de fibre optique à l'aide d'un moyen (12) de blocage de la lumière, le moyen de blocage ayant une forme arrondie dans une zone faisant face à l'extrémité avant de la lumière ; et

    à insérer une fibre optique dans la lumière et dans un adhésif (6) disposé dans celle-ci afin qu'une extrémité avant de la fibre optique entre en contact avec le moyen de blocage de la lumière ;

    caractérisé en ce que le moyen de blocage de la lumière est formé d'une matière suffisamment élastique pour qu'elle soit déformée par l'extrémité avant de la fibre optique et enlève tout adhésif disposé sur elle.

9. Procédé selon la revendication 8, comprenant en outre l'étape qui consiste à faire ramollir l'adhésif disposé à l'intérieur de la lumière du corps de contact de la libre optique avant l'insertion de la fibre optique dans la lumière.

10. Procédé selon la revendication 8, dans lequel l'extrémité avant de la lumière est bloquée avec une force suffisamment grande pour que de l'adhésif soit introduit à force dans un espace annulaire (20) défini par une surface cylindrique extérieure de l'extrémité avant de la libre optique et une surface cylindrique intérieure d'une partie avant de la lumière.

11. Procédé selon la revendication 10, comprenant en outre l'étape qui consiste à enlever le moyen de blocage (12) de l'extrémité avant de la lumière après la prise de l'adhésif.

**Patentansprüche**

1. Vorrichtung zum Abschließen eines Lichtwellenleiters (10), die folgendes aufweist:

    - einen Lichtwellenleiter-Kontaktkörper (2), in dem eine Einrichtung zum Festlegen eines Lichtwellenleiters in einer Bohrung (3) vorgesehen ist, wobei die Bohrung so bemessen ist, daß sie in der Lage ist, den Lichtwellenleiter aufzunehmen; und

    - eine Einrichtung (12) zum Blockieren eines Vorderendes (8) der Bohrung, wenn der Lichtwellenleiter in die Bohrung zum Abschließen eingeführt wird, wobei die Blockiereinrichtung in einem dem Vorderende der Bohrung gegenüberliegenden Bereich (13) eine gekrümmte Form hat,

dadurch gekennzeichnet,

daß der gekrümmt geformte Bereich (13) der Blockiereinrichtung aus einem Material besteht, das elastisch so verformbar ist, daß der gekrümmt geformte Bereich der Blockiereinrichtung (12) fähig ist, von einer vorderen Fläche (11) des Lichtwellenleiters (10) Klebstoff (6) zu entfernen, während der Lichtwellenleiter den gekrümmt geformten Bereich der Blockiereinrichtung (12) berührt und verformt.

2.  Vorrichtung nach Anspruch 1, die ferner folgendes aufweist:
    -   eine erste Krafteinrichtung (16), um den gekrümmt geformten Bereich der Blockiereinrichtung gegen das Vorderende der Bohrung zu drücken; und
    -   eine zweite Krafteinrichtung (18), um die vordere Fläche des Lichtwellenleiters gegen den gekrümmt geformten Bereich der Blockiereinrichtung zu drücken.

3.  Vorrichtung nach Anspruch 2, wobei der gekrümmt geformte Bereich der Blockiereinrichtung mit einem solchen Krümmungsradius geformt ist und aus einem Material mit einer solchen Elastizität besteht, daß die vordere Fläche des Lichtwellenleiters von dem Vorderende der Bohrung eine Vertiefung um einen vorgegebenen Betrag erhält, wenn der Lichtwellenleiter und die Blockiereinrichtung von der ersten und der zweiten Krafteinrichtung gegeneinander gedrückt werden.

4.  Vorrichtung nach Anspruch 3, wobei die von der ersten und der zweiten Krafteinrichtung erzeugten Kräfte so vorgegeben sind, daß wenigstens etwas von dem als Festlegeeinrichtung dienenden Klebstoff in einen Ringraum (20) zwischen einer Außenwand des Lichtwellenleiters und einem vorderen Bereich der Bohrung hineingepreßt wird.

5.  Vorrichtung nach Anspruch 4, wobei die Bohrung ein ungleichförmiges Querschnittsprofil hat, wobei der vordere Bereich der Bohrung einen kleineren Querschnitt hat als ein hinterer Bereich der Bohrung und die Festlegeeinrichtung aus einer Gruppe von Materialien ausgewählt ist, die aus Glas, Lot und einem Mehrkomponentengemisch besteht.

6.  Vorrichtung nach Anspruch 1, wobei die gekrümmte Form konvex ist.

7.  Vorrichtung nach Anspruch 1, wobei die gekrümmte Form sphärisch ist.

8.  Verfahren zum Abschließen eines Lichtwellenleiters (10), das folgende Schritte aufweist:
    -   Blockieren eines Vorderendes (8) einer in einem Lichtwellenleiter-Kontaktkörper (2) gebildeten Bohrung (3) mit einer Bohrungsblockiereinrichtung (12), wobei die Blockiereinrichtung in einem dem Vorderende der Bohrung gegenüberliegenden Bereich eine gekrümmte Form hat; und

    -   Einführen eines Lichtwellenleiters durch die Bohrung und einen darin angeordneten Klebstoff (6), derart, daß ein Vorderende des Lichtwellenleiters die Bohrungsblockiereinrichtung berührt,
    dadurch gekennzeichnet,
    daß die Bohrungsblockiereinrichtung aus einem Material besteht, das ausreichend elastisch ist, so daß es von dem Vorderende des Lichtwellenleiters verformt wird und jeglichen darauf befindlichen Klebstoff entfernt.

9.  Verfahren nach Anspruch 8, das ferner den Schritt des Erweichens des Klebstoffes, der in der Bohrung des Lichtwellenleiter-Kontaktkörpers angeordnet ist, vor dem Einführen des Lichtwellenleiters durch die Bohrung aufweist.

10. Verfahren nach Anspruch 8, wobei das Vorderende der Bohrung mit einer ausreichend großen Kraft blockiert wird, so daß der Klebstoff in einen Ringraum (20) gedrückt wird, der von einer äußeren Zylinderfläche des Vorderendes des Lichtwellenleiters und einer inneren Zylinderfläche eines vorderen Bereiches der Bohrung gebildet wird.

11. Verfahren nach Anspruch 10, das ferner den Schritt des Entfernens der Blockiereinrichtung (12) vom Vorderende der Bohrung nach dem Härten des Klebstoffs aufweist.

FIG_1

FIG_2

FIG_3